# EUROPÄISCHE PATENTSCHRIFT

(11) **EP 3 556 183 B1**
(45) Veröffentlichungstag und Bekanntmachung des Hinweises auf die Patenterteilung: **08.09.2021**
(21) Anmeldenummer: 17822255.0
(22) Anmeldetag: 18.12.2017
(51) Int. Cl.: H02J 1/00, H05B 47/10, H02J 1/14, H02M 7/219, H05B 45/375, H05B 45/10

(54) **LEUCHTEN-BUSSYSTEM**
LUMINAIRE BUS SYSTEM
SYSTÈME DE BUS D'ÉCLAIRAGE

(30) Priorität: 19.12.2016 DE 102016225495
(43) Veröffentlichungstag der Anmeldung: 23.10.2019
(73) Patentinhaber: Tridonic GmbH & Co KG, 6851 Dornbirn (AT)
(72) Erfinder: MARENT, Günter, 6780 Bartholomäberg (AT)
(74) Vertreter: Banzer, Hans-Jörg
(86) Internationale Anmeldenummer: PCT/EP2017/083342
(87) Internationale Veröffentlichungsnummer: WO 2018/114817

(56) Entgegenhaltungen:
- US-A1- 2012 297 104
- US-A1- 2015 359 074

## Beschreibung

### TECHNISCHES GEBIET

Verschiedene Ausführungsformen der Erfindung betreffen im Allgemeinen das Bestimmen eines Betriebspunkts eines AC/DC-Umsetzers für ein Leuchten-Bussystem. Verschiedene Ausführungsformen der Erfindung betreffen insbesondere das Bestimmen des Betriebspunkts basierend auf einer Leistungsaufnahme des Leuchten-Bussystems.

### HINTERGRUND

Die Druckschrift US 2015/0359074 A1 offenbart ein Verfahren nach dem Oberbegriff des Anspruchs 1. Dabei wird der Gesamtleistungsverbrauch mehrerer Lichtlasten, die an einen Bus angeschlossen sind, für verschiedene Gleichspannungssignale gemessen und dasjenige Gleichspannungssignal, bei dem der Gesamtleistungsverbrauch minimal ist, ausgewählt.

Die Druckschrift US 2012/0297104 A1 beschreibt eine gesteuerte Architekturoptimierung für einen Zwischenbus. Dabei wird eine Eingangsspannung in eine Busspannung auf einen Zwischenbus gewandelt. Zusätzlich wird eine Gesamtsystemleistung abhängig von einer überwachten Systemvariablen verbessert.

Es sind Techniken bekannt, um mehrere Leuchten mittels eines Leuchten-Bussystem mit Energie zu versorgen. Es ist möglich, dass über das Leuchten-Bussystem eine Gleichspannung an die Leuchten übertragen wird. Eine solche Implementierung eines Leuchten-Bussystems mit einer Betriebs-Gleichspannung (engl. DC string) weist den Vorteil auf, dass es entbehrlich sein kann, für jede Leuchte einen separaten AC/DC-Umsetzer bereitzustellen. Dies kann die Komplexität der einzelnen Leuchten verringern; außerdem können die Leuchten oftmals mit kleineren Abmessungen bereitgestellt werden.

Solche Techniken weisen jedoch oftmals bestimmte Nachteile und Einschränkungen auf. Beispielsweise kann eine verzweigte Systemarchitektur des Leuchten-Bussystems zu einem komplexen Verlustleistungsnetzwerk führen. Dies kann insbesondere für solche Leuchten-Bussysteme zutreffen, die eine vergleichsweise geringe Betriebs-Gleichspannung verwenden, zum Beispiel mit einer Amplitude von weniger als 60 V. Die Verlustleistung kann dabei in manchen Beispielen durch die Systemarchitektur vorgegeben sein; optional kann es aber vorkommen, dass die Designreserven zu einer in Bezug auf die Verlustleistung nicht optimalen Wahl der Betriebs-Gleichspannung führen. Solche Probleme können insbesondere im Zusammenhang mit vergleichsweise einfachen Beleuchtungssystemen auftreten, bei denen keine oder nur eine eingeschränkte Kommunikationsmöglichkeit zwischen den einzelnen Leuchten zur Verfügung steht.

### KURZE ZUSAMMENFASSUNG DER ERFINDUNG

Deshalb besteht ein Bedarf für verbesserte Techniken zum Betreiben eines Leuchten-Bussystems. Insbesondere besteht ein Bedarf für solche Techniken, die zumindest einige der oben genannten Nachteile und Einschränkungen beheben oder lindern.

Diese Aufgabe wird von den Verfahrensmerkmalen des unabhängigen Patentanspruchs 1 und von den Vorrichtungsmerkmalen des unabhängigen Patentanspruchs 13 gelöst. Die Merkmale der abhängigen Patentansprüche definieren Ausführungsformen.

Das Verfahren umfasst das Ansteuern eines AC/DC-Umsetzers zum sequenziellen Einspeisen von mehreren Kalibrations-Gleichspannungen in ein Leuchten-Bussystem. Der AC/DC-Umsetzer kann einen oder mehrere DC/DC-Umsetzer als Teil des Leuchten-Bussystem mit den Kalibrations-Gleichspannungen speisen. Dabei umfasst das Verfahren für jede Kalibrations-Gleichspannung: Bestimmen einer entsprechenden Leistungsaufnahme des Leuchten-Bussystems. Das Verfahren umfasst weiterhin das Bestimmen eines Betriebspunkt des AC/DC-Umsetzers und der DC/DC-Umsetzer basierend auf den Leistungsaufnahmen. Das Verfahren umfasst weiterhin das Ansteuern des AC/DC-Umsetzers zum Einspeisen einer Betriebs-Gleichspannung in das Leuchten-Bussystem in Übereinstimmung mit dem Betriebspunkt.

Beispielsweise könnte der AC/DC-Umsetzer einen Gleichrichter umfassen, der eine AC-Eingangsspannung in eine DC-Spannung umsetzt. Beispielsweise könnte der AC/DC-Umsetzer einen Aufwärtswandler oder einen Abwärtswandler umfassen, der im DC-Regime des AC/DC-Umsetzers angeordnet ist. Es könnte z.B. eine Valley-Fill-Schaltung verwendet werden. Beispielsweise könnte der AC/DC-Umsetzer einen Glättungsfilter etc. aufweisen. Der AC/DC-Umsetzer kann eingerichtet sein, um eine Gleichspannung mit variabler Amplitude auszugeben. Dazu könnte z.B. die Schaltfrequenz eines Schaltelements eines Aufwärts- oder Abwärtswandlers eingestellt werden.

Die Kalibrations-Gleichspannungen können unterschiedliche Amplituden aufweisen. Dadurch kann es möglich sein, die Leistungsaufnahmen für einen bestimmten Betriebsbereich des AC/DC-Umsetzers und der DC/DC-Umsetzer abzutasten. Die Leistungsaufnahme kann als Funktion des Betriebspunkts des Bussystems charakterisiert werden. Die Kalibrations-Gleichspannungen können in einer Kalibrationsphase angewendet werden, d.h. beispielsweise außerhalb des bestimmungsgemäßen Betriebs.

Das Leuchten-Bussystem wird oftmals auch als DC-Leuchten-Bussystem bezeichnet, weil es eingerichtet ist, um Gleichspannungen zum Betreiben von Leuchten zu übertragen. Das Leuchten-Bussystem kann einen oder mehrere Leiter umfassen. Beispielsweise könnte jeweils ein Signalleiter und ein Masseleiter bereitgestellt sein. Die integrale Leiterlänge des Leuchten-Bussystems pro AC/DC-Umsetzer kann z.B. im Bereich von einigen Metern bis einige hundert Meter liegen. Typische Leuchten-Bussysteme können z.B. einen Betriebsbereich der Betriebs-Gleichspannung im Bereich von 12 V bis 48 V oder auch 50 V - 250 V aufweisen.

Beispielsweise könnte das Leuchten-Bussystem mit ein oder mehreren Leuchten verbunden sein. Zum Beispiel könnte das Leuchten-Bussystem mit einer Anzahl von mehr als fünf Leuchten verbunden sein, optional von mehr als 20 Leuchten, weiter optional von mehr als 50 Leuchten verbunden sein. In den verschiedenen hierin beschriebenen Beispielen können unterschiedlichste Typen von Leuchten verwendet werden. Beispielsweise könnten Leuchtdioden, Halogenlampen, Gasentladungslampen, Glühlampen, etc. verwendet werden.

Die Leistungsaufnahme des Leuchten-Bussystems kann einer Leistungsabgabe des AC/DC-Umsetzers entsprechen. Die Leistungsaufnahme des Leuchten-Bussystems kann sowohl eine Verlustleistung, als auch eine Betriebsleistung der Leuchten umfassen. Beispielsweise könnte die Verlustleistung in Form von Wärmeenergie im Bereich der Leitungen des Leuchten-Bussystems dissipiert werden. Dies kann die Energiebilanz verschlechtern.

Beispielsweise könnte der Betriebspunkt charakterisiert sein durch die Betriebs-Gleichspannung. Der Betriebspunkt könnte alternativ oder zusätzlich aber auch charakterisiert sein durch einen Stromfluss. Der Betriebspunkt könnte alternativ oder zusätzlich auch charakterisiert sein durch eine Leistungsaufnahme des Leuchten-Busssystems.

Beispielsweise kann mittels der hierin beschriebenen Techniken erreicht werden, dass der Betriebspunkt des AC/DC-Umsetzers und der DC/DC-Umsetzer derart gewählt wird, dass eine besonders geringe Verlustleistung beim Betrieb des Leuchten-Bussystems mit der Betriebs-Gleichspannung auftritt. Durch das Verwenden der mehreren Kalibrations-Gleichspannungen kann es möglich sein, die Leistungsaufnahme des Leuchten-Bussystems in einem bestimmten Betriebsbereich des AC/DC-Umsetzers und der DC/DC-Umsetzer empirisch zu charakterisieren. Derart kann es möglich sein, die besonders geringe Verlustleistung flexibel für unterschiedliche Systemarchitekturen des Leuchten-Bussystems zu erreichen. Außerdem kann eine aufwändige manuelle Optimierung des Betriebspunkt entfallen.

In manchen Beispielen kann das Bestimmen des Betriebspunkt eine Optimierung der Verlustleistung des Leuchten-Bussystems umfassen.

Zum Beispiel können im Rahmen der Optimierung verschiedene, dem Fachmann grundsätzlich vorbekannte Optimierungs-Algorithmen eingesetzt werden. Es wäre optional möglich, dass die Optimierung eine oder mehrere Randbedingungen berücksichtigt. Beispiele für Randbedingungen umfassen zum Beispiel: Betriebsparameter von den Leuchten zugeordneten DC/DC-Umsetzern; Dimmer-Level der Leuchten; etc.

Durch das Durchführen der Optimierung in Bezug auf die Verlustleistung kann ein besonders sparsamer Betrieb des Leuchten-Bussystems erzielt werden. Außerdem kann es möglich sein, den Betriebspunkt flexibel und automatisch zu bestimmen. Durch die Optimierung kann es möglich sein, den optimalen Betriebspunkt besonders genau und/oder besonders zügig aufzufinden.

Beispielsweise wäre es möglich, dass eine Kalibrationsphase das Ansteuern des AC/DC-Umsetzers zum sequenziellen Einspeisen der mehreren Kalibrations-Gleichspannungen umfasst. Eine Betriebsphase kann weiterhin das Ansteuern des AC/DC-Umsetzers zum Einspeisen der Betriebs-Gleichspannung umfassen. Das Verfahren kann das wiederholte Auslösen der Kalibrationsphase und das wiederholte Bestimmen des Betriebspunkt für eine jeweils nachfolgend ausgelöste Betriebsphase umfassen.

Zum Beispiel wäre es möglich, dass die Kalibrationsphase und die Betriebsphase jeweils abwechselnd ausgeführt werden. Jeder Kalibrationsphase könnte damit eine Betriebsphase zugeordnet sein, in welcher ein jeweils aktuell bestimmter Betriebspunkt durch die Wahl der entsprechenden Betriebs-Gleichspannung verwendet wird.

Indem die Kalibrationsphase mehrfach und wiederholt ausgeführt wird, können dynamische Effekte berücksichtigt werden. Beispielsweise könnte die Abhängigkeit der Verlustleistung vom Betriebspunkt des AC/DC-Umsetzers einen Drift als Funktion der Zeit aufweisen. Es wäre ferner möglich, dass die Verlustleistung eine Abhängigkeit vom Dimmer-Level der Leuchten, die mit dem Leuchten-Bussystem gekoppelt sind, aufweist, oder eine Abhängigkeit von anderen Betriebsparametern. Solche Abhängigkeiten können durch das wiederholte Ausführen der Kalibrationsphase berücksichtigt werden.

Zum Beispiel könnte das wiederholte Auslösen der Kalibrationsphase gemäß einem vorgegebenen Zeitschema erfolgen. Zum Beispiel könnte das wiederholte Auslösen der Kalibrationsphase periodisch erfolgen. Typische Zeitdauern zwischen dem aufeinanderfolgenden Auslösen der Kalibrationsphase können zum Beispiel im Bereich von Tagen, Monaten oder Wochen liegen. Einerseits kann das häufige Auslösen der Kalibrationsphase erstrebenswert sein, um dynamische Effekte in Bezug auf den optimalen Betriebspunkt des AC/DC-Umsetzers zu berücksichtigen; andererseits kann es jedoch erstrebenswert sein, den normalen Betrieb des Leuchten-Bussystems in der Betriebsphase nicht besonders häufig zu unterbrechen.

Zum Beispiel könnte das Durchführen der Kalibrationsphase durch ein oder mehrere Ereignisse ausgelöst werden. Ein Beispiel für ein Ereignis kann die Initialisierung des Leuchten-Bussystems sein.

Zum Beispiel könnte also das Ansteuern des AC/DC-Umsetzers zum sequenziellen Einspeisen der mehreren Kalibrations-Gleichspannungen, d.h. beispielsweise eine Kalibrationsphase, ausgelöst werden durch eine Initialisierung des Leuchten-Bussystems.

Dabei könnte die Initialisierung des Leuchten-Bussystems zum Beispiel die Inbetriebnahme des Leuchten-Bussystems nach einer bestimmten Zeitdauer ohne Stromversorgung bezeichnen. Beispielsweise könnte die Initialisierung des Leuchten-Bussystems die erstmalige Inbetriebnahme des Leuchten-Bussystems bezeichnen (engl. commissioning).

Ein weiteres Ereignis, welches das Durchführen der Kalibrationsphase auslösen könnte, wäre zum Beispiel das Verändern eines Dimmer-Levels von Leuchten, die mit dem Leuchten-Bussystem verbunden sind. Derart können Abhängigkeiten des bevorzugten Betriebspunkts vom Dimmer-Level berücksichtigt werden.

Erfindungsgemäß wird mehr als ein einzelner AC/DC-Umsetzer zum Betreiben des Leuchten-Bussystems verwendet. Zum Beispiel könnten zwei an unterschiedlichen Orten angeordnete AC/DC-Umsetzer verwendet werden. Derart kann es möglich sein, eine Ausfallsicherheit des Leuchten-Bussystems zu erhöhen. Außerdem kann es möglich sein, eine verteilte Energieversorgung und damit eine verbesserte Energiebilanz zu erzielen.

Das Verfahren umfasst daher weiterhin das Ansteuern eines weiteren AC/DC-Umsetzers zum sequenziellen Einspeisen von mehreren weiteren Kalibrations-Gleichspannungen in das Leuchten-Bussystem. Das Verfahren umfasst für jede der mehreren Kalibrations-Gleichspannungen das Bestimmen einer entsprechenden weiteren Leistungsaufnahme des Leuchten-Bussystems. Dann wird der Betriebspunkt des AC/DC-Umsetzers ferner basierend auf den weiteren Leistungsaufnahmen bestimmt. Typischerweise kann die Verlustleistung des Leuchten-Bussystems sowohl von der Betriebs-Gleichspannung abhängen, die von dem AC/DC-Umsetzer bereitgestellt wird, als auch von der weiteren Betriebs-Gleichspannung, die von dem weiteren AC/DC-Umsetzer bereitgestellt wird. Deshalb kann es erstrebenswert sein, den Parameterraum der Optimierung in Bezug auf die Verlustleistung auch auf die weitere Betriebs-Gleichspannung zu erstrecken, die von dem weiteren AC/DC-Umsetzer bereitgestellt wird. Dann kann die Verlustleistung besonders stark reduziert werden.

Zum Beispiel wäre es diesbezüglich möglich, dass Steuerdaten an eine mit dem AC/DC-Umsetzer assoziierten Schnittstelle und/oder an eine mit dem weiteren AC/DC-Umsetzer assoziierten weitere Schnittstelle übermittelt werden. Die Steuerdaten können dabei eine Synchronisation des Ansteuerns des AC/DC-Umsetzers zum Einspeisen der mehreren Kalibrations-Gleichspannungen und des Ansteuerns des weiteren AC/DC-Umsetzers zum Einspeisen der mehreren weiteren Kalibrations-Gleichspannungen bewirken.

Beispielsweise könnten die Schnittstellen der AC/DC-Umsetzer Funktechnologie, Stromnetzmodulation (engl. power line communication, PLC) oder ein anderes Kommunikationsprotokoll verwenden. Dabei kann es sich bei den Steuerdaten um eine peer-to-peer Kommunikation zwischen den beiden AC/DC-Umsetzern handeln; oder um eine Kommunikation von einem zentralen Steuergerät an die Schnittstellen.

Zum Beispiel könnte jeweils zeitsynchronisiert zwischen unterschiedlichen Kalibrations-Gleichspannungen und unterschiedlichen weiteren Kalibrations-Gleichspannungen umgeschaltet werden. Dies bedeutet, dass jeweils Paare von Kalibrations-Gleichspannungen an den AC/DC-Umsetzern implementiert werden können. Derart ist es möglich, dass jede bestimmte Leistungsaufnahme des Leuchten-Bussystems sowohl mit einer wohldefinierten Kalibrations-Gleichspannung des AC/DC-Umsetzers assoziiert ist, als auch mit einer wohldefinierten weiteren Kalibrations-Gleichspannung des weiteren AC/DC-Umsetzers assoziiert ist. Derart kann der Parameterraum der Optimierung besonders effizient und schnell abgetastet werden.

Beispielsweise wäre es möglich, dass das Bestimmen des Betriebspunkt des AC/DC-Umsetzers eine globale Optimierung der Verlustleistung des Leuchten-Bussystems bei Versorgung durch den AC/DC-Umsetzer und den weiteren AC/DC-Umsetzer umfasst. Dies kann in anderen Worten bedeuten, dass die Verlustleistung nicht lediglich in Bezug auf die Leistungsaufnahme des Leuchten-Bussystems beim AC/DC-Umsetzer optimiert wird, sondern auch in Bezug auf die Leistungsaufnahme des Leuchten-Bussystems beim weiteren AC/DC-Umsetzer. Dabei kann also eine gekoppelte Optimierung für die verschiedenen AC/DC-Umsetzer erfolgen. Damit kann die Verlustleistung besonders stark reduziert werden.

Entsprechend wäre es auch möglich, dass ein weiterer Betriebspunkt des weiteren AC/DC-Umsetzers basierend auf den Leistungsaufnahmen und ferner basierend auf den weiteren Leistungsaufnahmen bestimmt wird. Dann könnte der weitere AC/DC-Umsetzer zum Einspeisen einer weiteren Betriebs-Gleichspannungen des Leuchten-Bussystem in Übereinstimmung mit dem weiteren Betriebspunkt angesteuert werden. Zum Beispiel könnte der Betriebspunkt des AC/DC-Umsetzers verschieden sein von den Betriebspunkt des weiteren AC/DC-Umsetzers.

In anderen Worten kann die globale Optimierung bewirken, dass eine asymmetrische Situation in Bezug auf die durch den AC/DC-Umsetzer und den weiteren AC/DC-Umsetzer bereitgestellte Energieversorgung für die mit dem Leuchten-Bussystem verbundenen Leuchten erreicht wird. Dadurch kann dann die Verlustleistung des Leuchten-Bussystems insgesamt reduziert werden.

In manchen Beispielen wäre es möglich, dass der Betriebspunkt die Betriebs-Gleichspannung explizit beschreibt. Dazu kann z.B. ein quantitativer Indikator einer bestimmten Länge vorgesehen sein. Zum Beispiel kann als Ergebnis der Optimierung hinsichtlich der Verlustleistung eine bestimmte Betriebs-Gleichspannung ermittelt werden, die dann für den Betrieb des Leuchten-Bussystems verwendet wird.

In anderen Beispielen könnte jedoch der Betriebspunkt eine Soll-Leistungsaufnahme des Leuchten-Bussystems - zum Beispiel bezogen auf einen bestimmten AC/DC-Umsetzer - bezeichnen. Dann könnte das Ansteuern des AC/DC-Umsetzers zum Einspeisen der Betriebs-Gleichspannung geregelt erfolgen, wobei eine basierend auf der Soll-Leistungsaufnahme bestimmte Führungsgröße verwendet wird und die Betriebs-Gleichspannung als Regelgröße.

In einem weiteren Beispiel ist eine Recheneinheit eingerichtet, um die folgenden Schritte durchzuführen: Ansteuern eines AC/DC-Umsetzers zum sequenziellen Einspeisen von mehreren Kalibrations-Gleichspannungen in ein Leuchten-Bussystem; für jede Kalibrations-Gleichspannung: Bestimmen einer entsprechenden Leistungsaufnahme des Leuchten-Bussystems; Bestimmen eines Betriebspunkt des AC/DC-Umsetzers basierend auf den Leistungsaufnahmen; sowie Ansteuern des AC/DC-Umsetzers zum Einspeisen einer Betriebs-Gleichspannung in das Leuchten-Bussystem in Übereinstimmung mit dem Betriebspunkt.

### KURZE BESCHREIBUNG DER FIGUREN

FIG. 1 illustriert schematisch ein Beleuchtungssystem mit einem AC/DC-Umsetzer, einem Leuchten-Bussystem, sowie mehreren Leuchten gemäß verschiedener Beispiele.
FIG. 2 illustriert schematisch einen AC/DC-Umsetzer gemäß verschiedener Beispiele.
FIG. 3 illustriert schematisch ein Beleuchtungssystem mit einer Steuereinheit, einem AC/DC-Umsetzer, einem Leuchten-Bussystem, sowie mehreren Leuchten gemäß verschiedener Beispiele.
FIG. 4 illustriert schematisch einen AC/DC-Umsetzer gemäß verschiedener Beispiele.
FIG. 5 illustriert schematisch eine Steuereinheit gemäß verschiedener Beispiele.
FIG. 6 ist ein Flussdiagramm das das wiederholte Umschalten zwischen einer Kalibrationsphase und einer Betriebsphase für ein Leuchtensystem umfasst.
FIG. 7 ist ein Flussdiagramm das das Bestimmen mehrerer Leistungsaufnahmen bei unterschiedlichen Kalibrations-Gleichspannungen umfasst.
FIG. 8 illustriert schematisch die Verlustleistung für unterschiedliche Betriebs-Gleichspannungen, die in ein Leuchten-Bussystem gemäß verschiedener Beispiele eingespeist werden.
FIG. 9 illustriert erfindungsgemäß ein Beleuchtungssystem mit zwei AC/DC-Umsetzern, einem Leuchten-Bussystem, sowie mehreren Leuchten gemäß verschiedener Beispiele.

### DETAILLIERTE BESCHREIBUNG VON BEVORZUGTEN AUSFÜHRUNGSBEISPIELEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden verschiedene Techniken beschrieben, mittels welchen es möglich ist, einen Wirkungsgrad bzw. eine Verlustleistung eines Leuchten-Bussystems zu optimieren. Dabei kann es in den hierin beschriebenen Techniken möglich sein, die Verlustleistung unter Vorgabe einer bestimmten Systemarchitektur des Leuchten-Bussystems zu optimieren. Dies bedeutet, dass die Optimierung beispielsweise die Topologie, die Betriebsweise und die Bauform der AC/DC-Umsetzer und/oder von DC/DC-Umsetzern berücksichtigen kann. Entsprechend wäre es beispielsweise möglich, dass die Optimierung bestimmt weitere Parameter der Systemarchitektur, beispielsweise Geometrie, Länge und Material von Leitungen des Leuchten-Bussystems berücksichtigt.

In verschiedenen hierin beschriebenen Techniken kann die Optimierung der Verlustleistung durch geeignete Wahl der Betriebs-Gleichspannung, die ein AC/DC-Umsetzer bereitstellt, oder mehrerer Betriebs-Gleichspannungen, die mehrere AC/DC-Umsetzer bereitstellen, erfolgen. Im Allgemeinen können ein oder mehrere Betriebspunkte für ein oder mehrere AC/DC-Umsetzer bestimmt werden. Diesen Techniken liegt die Erkenntnis zugrunde, dass oftmals der Betriebspunkt von einem oder mehreren AC/DC-Umsetzern zumindest innerhalb einer gewissen Toleranz verändert werden kann, ohne den Betrieb von Leuchten einzuschränken. Eine solche Veränderung des Betriebspunkts kann aber eine Reduktion der Verlustleistung bewirken.

In manchen Beispielen kann dabei ein bevorzugter Betriebspunkt für einen oder für jeden von mehreren AC/DC-Umsetzern empirisch bestimmt werden. Dazu können unterschiedliche Kalibrations-Gleichspannungen verwendet werden und jeweils die Leistungsaufnahme des Leuchten-Bussystems bestimmt werden. Daraus kann beispielsweise eine optimierte Betriebs-Gleichspannung abgeleitet werden. Zum Beispiel könnte dann die Betriebs-Gleichspannung für den normalen Betrieb des Leuchten-Bussystems aus der Menge der Kalibrations-Gleichspannungen ausgewählt werden. Es wäre aber auch möglich, dass der - möglicherweise recht große - Parameterraum der Kalibrations-Gleichspannungen im Rahmen einer Optimierung gezielt abgetastet wird. Dies kann bedeuten, dass die Auswahl bzw. Variation der Kalibrations-Gleichspannungen durch einen Optimierungsalgorithmus gezielt erfolgt. Dann kann eine entsprechende Kalibrationsphase vergleichsweise schnell abgeschlossen werden. Dies ermöglicht das häufige Wiederholen der Kalibrationsphase und damit das genaue Berücksichtigung von Veränderungen über der Zeit.

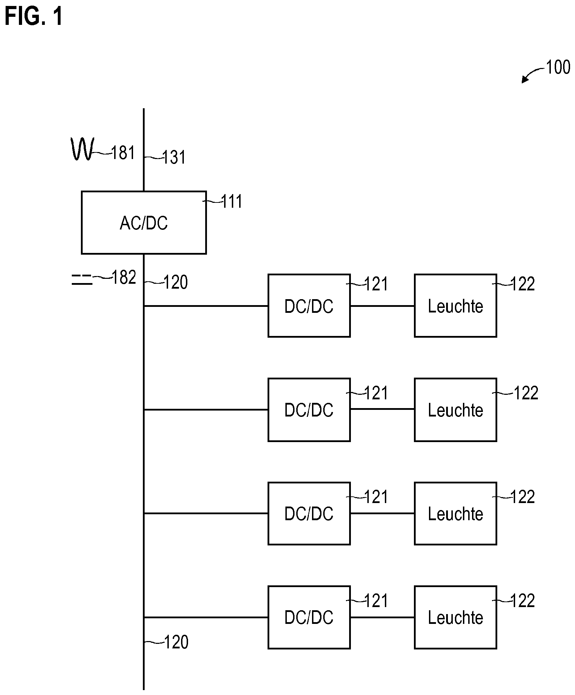

FIG. 1 illustriert Aspekte in Bezug auf ein nichterfindungsgemäßes Leuchtensystem 100. Das Leuchtensystem 100 umfasst einen Netzleitung 131, über die eine AC-Versorgungsspannung 181 empfangen wird. Ein Betriebsgerät 111 umfasst einen AC/DC-Umsetzer 1111 und wandelt die AC-Versorgungsspannung 181 in eine Betriebs-Gleichspannung 182. Diese Betriebs-Gleichspannung 182 wird in ein Leuchten-Bussystem 120 des Leuchtensystems 100 eingespeist.

Das Leuchten-Bussystem 120 umfasst mehrere Leitungen, die zum Beispiel sternförmig, ringförmig, oder anderweitig angeordnet zu DC/DC-Umsetzern 121 führen. Diese DC/DC-Umsetzer 121 werden somit mit der Betriebs-Gleichspannung 182 ausgehend von dem AC/DC-Umsetzer 1111 gespeist. Diese DC/DC-Umsetzer 121 können den Pegel der Betriebs-Gleichspannung 182 auf einen Wert wandeln, der den Betrieb von mit dem Leuchten-Bussystem 120 verbundenen Leuchten 122 ermöglicht. Die DC/DC-Umsetzer 121 können eine Stromquellenfunktion implementieren. Optional können die DC/DC-Umsetzer z.B. Dimmer-Funktionalität bereitstellen. Zum Beispiel könnten die Leuchten 122 durch Leuchtdioden implementiert werden, welche auf einem LED Modul angeordnet sein können, dann werden die DC/DC-Umsetzer 121 typischerweise als Gleichspannungswandler, insbesondere Abwärtswandler, Inverswandler oder Aufwärtswandler, zum Beispiel mit einem Schaltelement, einer Freilaufdiode und einer Speicherdrossel, implementiert. Die DC/DC Umsetzer 121 können in der Leuchte 122 integriert sein oder als externes Modul angeordnet werden. Die DC/DC Umsetzer 121 können beispielsweise auf dem LED Modul, also auf der gleichen Platine wie die Leuchtdioden, angeordnet werden. Im Beispiel der FIG. 1 umfasst das Leuchtensystem 100 eine Anzahl von vier Leuchten. Im Allgemeinen wäre es aber möglich, dass das Leuchtensystem 100 eine größere oder kleinere Anzahl von Leuchten 122 aufweist. Die DC/DC-Umsetzer 121 können die Helligkeit der jeweils verbundenen Leuchte 122 einstellen, beispielsweise die Amplitude des Stromes durch die Leuchtdioden. Die Einstellung der Helligkeit kann beispielsweise abhängig von der Vorgabe des Dimmer-Level für die Leuchten 122 erfolgen.

Es wurde beobachtet, dass die Verlustleistung des Leuchten-Bussystems 120 für unterschiedliche Amplituden der Betriebs-Gleichspannung 182 unterschiedliche Werte annehmen kann. Dies kann ausgenutzt werden, um im Rahmen einer Kalibration der Betriebs-Gleichspannung die Verlustleistung zu optimieren.

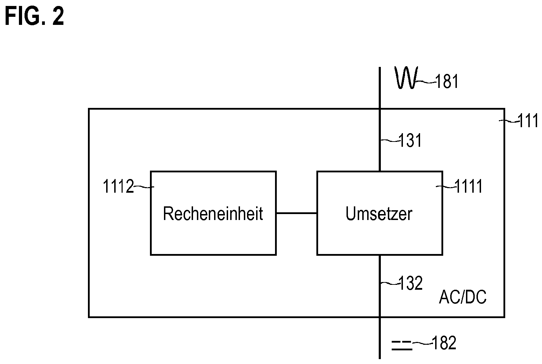

FIG. 2 illustriert Aspekte in Bezug auf das Betriebsgerät 111. Das Betriebsgerät 111 umfasst einen AC/DC-Umsetzer 1111. Beispielsweise könnte der AC/DC-Umsetzer einen Brückengleichrichter mit mehreren Dioden, einen DC/DC-Umsetzer und einen Glättungsfilter aufweisen. Der AC/DC-Umsetzer 1111 wird durch eine Recheneinheit 1112 angesteuert. Beispielsweise könnte die Recheneinheit 1112 eine Schaltfrequenz eines Schaltelements des AC/DC-Umsetzers 1111 steuern. Die Recheneinheit 1112 könnte zum Beispiel als Mikrocontroller, Mikroprozessor, Feld-programmierbares Array (FPGA) oder applikationsspezifischer integrierter Schaltkreis (ASIC) implementiert sein.

Die Recheneinheit 1112 kann eingerichtet sein, um die Amplitude der Betriebs-Gleichspannung 182, die von dem AC/DC-Umsetzer 1111 an das Leuchten-Bussystem 120 ausgegeben wird, einzustellen. Zum Beispiel könnte dazu das Betriebsgerät 111 eine Kommunikationsschnittstelle aufweisen (in FIG. 2 nicht dargestellt), über welche Steuerdaten empfangen werden; dann könnte die Recheneinheit 1112 die Amplitude der Betriebs-Gleichspannung 182 entsprechend der Steuerdaten einstellen. Die Recheneinheit 1112 könnte alternativ oder zusätzlich eine Benutzereingabe über eine Benutzerschnittstelle empfangen und darauf basierend die Amplitude der Betriebs-Gleichspannung 182 einstellen.

In dem Beispiel der FIG. 2 ist die Logik zur Einstellung der Amplitude der Betriebs-Gleichspannung 182 in dem Betriebsgerät 111 angeordnet. In anderen Beispielen könnte diese Logik auch außerhalb des Betriebsgeräts 111 angeordnet sein.

Die DC/DC Umsetzer 121 können auch jeweils durch eine DC/DC-Recheneinheit (nicht dargestellt) angesteuert werden. Beispielsweise könnte die DC/DC-Recheneinheit eine Schaltfrequenz eines Schaltelements des DC/DC-Umsetzers 121 steuern. Die DC/DC-Recheneinheit könnte zum Beispiel als Mikrocontroller, Mikroprozessor, Feld-programmierbares Array (FPGA) oder applikationsspezifischer integrierter Schaltkreis (ASIC) implementiert sein.

Die DC/DC-Recheneinheit kann eingerichtet sein, um die Amplitude der Betriebs-Gleichspannung, die von dem DC/DC-Umsetzer 121 an die Leuchte 122 ausgegeben wird, einzustellen. Zum Beispiel könnte dazu der DC/DC-Umsetzer 121 eine Kommunikationsschnittstelle aufweisen (in FIG. 2 nicht dargestellt), über welche Steuerdaten empfangen werden; dann könnte die DC/DC-Recheneinheit die Amplitude der Betriebs-Gleichspannung für die Leuchte 122 entsprechend der Steuerdaten einstellen. Die DC/DC-Recheneinheit könnte alternativ oder zusätzlich eine Benutzereingabe über eine Benutzerschnittstelle empfangen und darauf basierend die Amplitude der Betriebs-Gleichspannung für die Leuchte 122 einstellen.

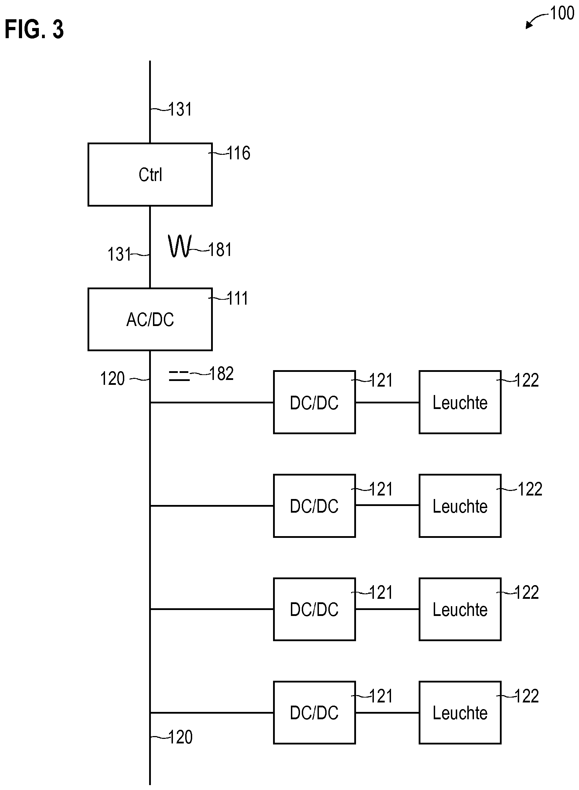

FIG. 3 illustriert Aspekte in Bezug auf ein weiteres nichterfindungsgemäßes Leuchtensystem 100. Das Leuchtensystem 100 gemäß dem Beispiel der FIG. 3 entspricht grundsätzlich dem Leuchtensystem 100 gemäß dem Beispiel der FIG. 1. In dem Beispiel der FIG. 3 umfasst das Leuchtensystem 100 weiterhin ein Steuergerät 116. Das Steuergerät 116 ist in dem Beispiel der FIG. 3 auch mit der Netzleitung 131 verbunden. Deshalb könnte das Steuergerät 116 Steuerdaten an das Betriebsgerät 111 mittels PLC senden bzw. Steuerdaten von dem Betriebsgerät 111 mittels PLC empfangen. Es wären aber auch andere Techniken zur Kommunikation zwischen dem Steuergerät 116 und dem Betriebsgerät 111 möglich.

In dem Beispiel der FIG. 3 könnte die Logik zu Einstellung der Amplitude der Betriebs-Gleichspannung 182 in dem Steuergerät 116 angeordnet sein. Dann kann es entbehrlich sein, eine entsprechende Logik im Betriebsgerät 111 vorzusehen.

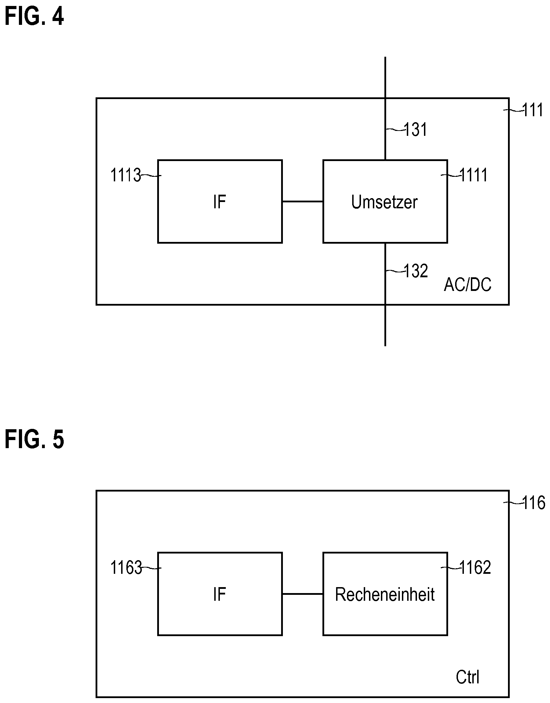

FIG. 4 illustriert Aspekte in Bezug auf das Betriebsgerät 111. Das Betriebsgerät 111 in dem Beispiel der FIG. 4 umfasst eine Kommunikationsschnittstelle 1113; in dem Beispiel der FIG. 4 ersetzt die Kommunikationsschnittstelle 1113 die Recheneinheit 1112 (vgl. FIG. 2). Zum Beispiel könnte ein solches Szenario gemäß dem Beispiel der FIG. 4 dann erstrebenswert sein, wenn ein zentrales Steuergerät 116 vorhanden ist, welches die Logikfunktionalität zur Steuerung des AC/DC-Umsetzers 1111 implementiert. Dann könnten entsprechende Steuerdaten von dem Steuergerät 116 über die Schnittstelle 1113 direkt an den AC/DC-Umsetzer 1111 weitergegeben werden.

FIG. 5 illustriert Aspekte in Bezug auf das Steuergerät 116. Das Steuergerät 116 umfasst eine Recheneinheit 1162 und eine Kommunikationsschnittstelle 1163. Beispielsweise könnte die Recheneinheit 1162, wie bereits beschrieben, Logikfunktionalität in Bezug auf das Einstellen der Amplitude der Betriebs-Gleichspannung durch Steuerung des AC/DC-Umsetzers 1111 des Betriebsgeräts 111 implementieren. Entsprechende Steuerdaten können dann über die Kommunikationsschnittstelle 1163 an das Betriebsgerät 111 gesendet werden. Die Recheneinheit 1162 könnte zum Beispiel als Mikrocontroller, Mikroprozessor, FPGA oder ASIC implementiert sein.

In den verschiedenen hierin beschriebenen Beispielen kann die entsprechende Logik zum Einstellen der Amplitude der Betriebs-Gleichspannung 182 in dem Steuergerät 116 und/oder in dem Betriebsgerät 111 angesiedelt sein.

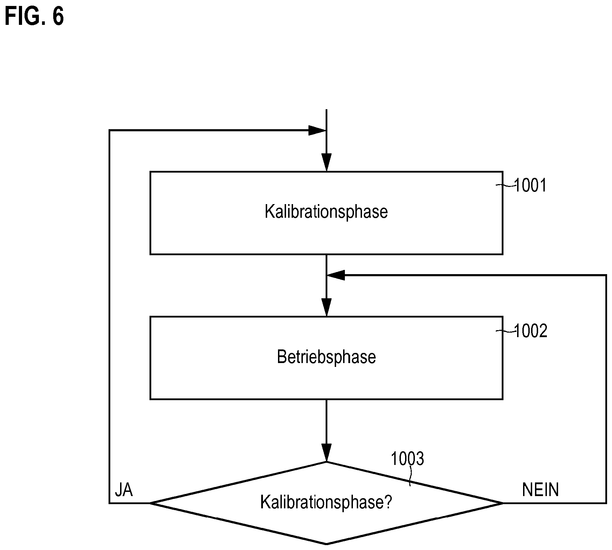

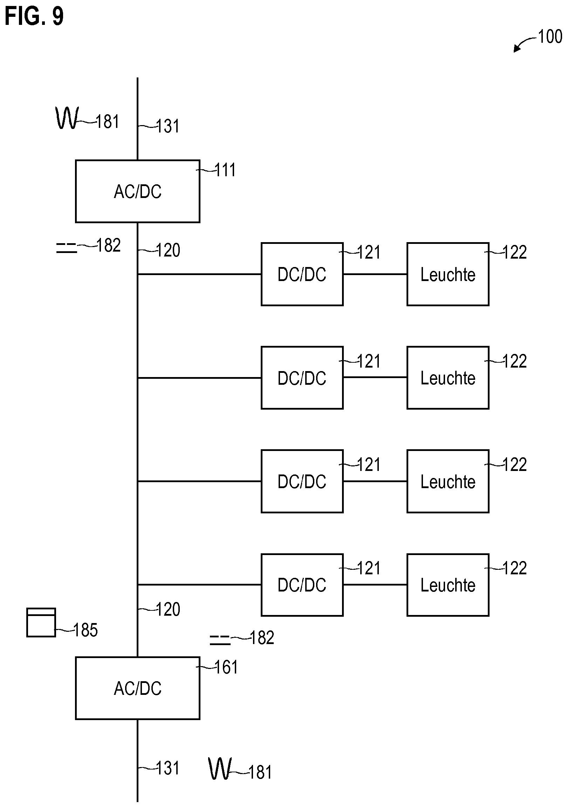

FIG. 6 ist ein Flussdiagramm für ein nichterfindungsgemäßes Leuchtensystem wie in FIG. 1 bzw. FIG. 3 und für ein erfindungsgemäßes Leuchtensystem wie in FIG. 9. Die Schritte des Flussdiagramms könnten z.B. von der Recheneinheit 1112 oder von der Recheneinheit 1162 ausgeführt werden.

Das Flussdiagramm beginnt mit Schritt 1001. Zum Beispiel könnte Schritt 1001 durch eine Initialisierung des Leuchten-Bussystems 120 ausgelöst werden. Dies kann dem erstmaligen Starten des Leuchten-Bussystems 120, z.B. durch Verbindung mit dem Netzanschluss 131, entsprechen. In Schritt 1001 wird eine Kalibrationsphase durchgeführt. Die Kalibrationsphase umfasst das sequentielle Einspeisen mehrerer Kalibrations-Gleichspannungen in das Leuchten-Bussystem 120. Mittels der Kalibrationsphase kann es möglich sein, Messdaten zu erheben, die es ermöglichen, empirisch einen besonders erstrebenswerten Betriebspunkt des AC/DC-Umsetzers 1111 und der DC/DC-Umsetzer 121 zu ermitteln. Dazu können in der Kalibrationsphase 1001 mehrere Kalibrations-Gleichspannungen in das Leuchten-Bussystem eingespeist werden - etwa durch geeignete Ansteuerung des AC/DC-Umsetzers 1111 mittels der Recheneinheit 1112 oder der Recheneinheit 1162 sowie der DC/DC-Umsetzer 121 durch die DC-DC-Recheneinheit - und die abgegebene Leistung bzw. die Leistungsaufnahme des Leuchten-Bussystems überwacht werden. Derart kann dann ein besonders bevorzugter Betriebspunkt des AC/DC-Umsetzers 1111 und der DC/DC-Umsetzer 121 ermittelt werden. Zum Beispiel könnte derjenige Betriebspunkt ermittelt werden, der einer minimalen Leistungsaufnahme des Leuchten-Bussystems 120 entspricht.

In Schritt 1002 wird dann eine Betriebsphase des Leuchten-Bussystems 120 ausgeführt. Dabei kann die Betriebsphase das Betreiben des AC/DC-Umsetzers 1111 und der DC/DC-Umsetzer 121 im zuvor in Schritt 1001 ermittelten Betriebspunkt umfassen.

In Schritt 1003 wird überprüft, ob eine weitere Kalibrationsphase durchgeführt werden soll. Beispielsweise könnte eine weitere Kalibrationsphase dann ausgeführt werden, wenn ein Dimmer-Level der Leuchten 122 verändert wurde. Dem liegt die Erkenntnis zugrunde, dass der bevorzugte Betriebspunkt eine Abhängigkeit vom Dimmer-Level der Leuchten 122 aufweisen kann. Beispielsweise könnte die Veränderung des Dimmer-Levels von der Steuereinheit 116 mittels entsprechenden Steuerdaten bewirkt werden.

In Schritt 1003 könnte z.B. alternativ oder zusätzlich auch der Ablauf eines Zeitgebers überwacht werden. In Schritt 1003 könnte z.B. alternativ oder zusätzlich auch eine Benutzereingabe ausgewertet werden. Andere Auslöse-Kriterien für die Kalibrationsphase in Schritt 1001 sind möglich. Durch Schritt 1003 wird die Kalibrationsphase 1001 wiederholt ausgelöst und es wird wiederholt der Betriebspunkt für die jeweils nachfolgende Betriebsphase 1002 bestimmt.

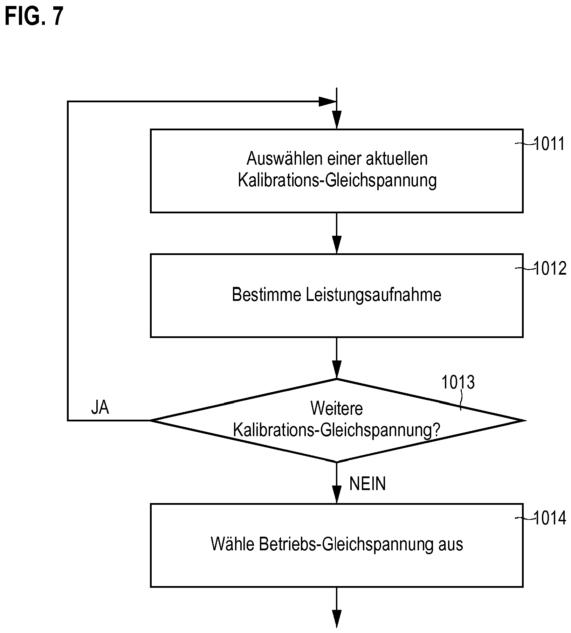

FIG. 7 ist ein weiteres Flussdiagramm für ein nichterfindungsgemäßes Leuchtensystem wie in FIG. 1 bzw. FIG. 3 und für ein erfindungsgemäßes Leuchtensystem wie in FIG. 9. Die Schritte des Flussdiagramms könnten z.B. von der Recheneinheit 1112 oder von der Recheneinheit 1162 ausgeführt werden. Beispielsweise könnten die Schritte des Flussdiagramms gemäß FIG. 7 im Rahmen des Schritts 1001 aus FIG. 6, d.h. als Kalibrationsphase, ausgeführt werden.

Zunächst wird in Schritt 1011 eine aktuelle Kalibrations-Gleichspannung ausgewählt. Die Kalibrations-Gleichspannung könnte in Schritt 1011 durch einen Optimierungs-Algorithmus ausgewählt werden, der einen bestimmten Parameterraum von Kalibrations-Gleichspannungen abtastet. In anderen Implementierungen könnte die Kalibrations-Gleichspannung auch im Rahmen einer abzuarbeiten Liste vorgegeben sein.

Dann wird in Schritt 1012 die Leistungsaufnahme des Leuchten-Bussystems 120 bestimmt. Die in Schritt 1012 bestimmte Leistungsaufnahme des Leuchten-Bussystems 120 ist mit der in Schritt 1011 ausgewählten Kalibrations-Gleichspannung assoziiert. Beispielsweise kann eine entsprechende Strom-Spannungs-Messung durchgeführt werden.

In Schritt 1013 wird überprüft, ob eine weitere Kalibrations-Gleichspannung ausgewählt werden soll. Dies könnte wiederum mittels eines Optimierungs-Algorithmus erfolgen. In anderen Implementierungen könnte überprüft werden, ob alle Kalibrations-Gleichspannungen einer abzuarbeiten Liste in früheren Iterationen von Schritten 1011, 1012 berücksichtigt wurden.

Sofern in Schritt 1013 entschieden wird, dass eine weitere Kalibrations-Gleichspannung berücksichtigt werden soll, werden die Schritte 1011 und 1012 erneut ausgeführt. Andernfalls wird Schritt 1014 ausgeführt. In Schritt 1014 wird der Betriebspunkt für den Betrieb des Leuchten-Bussystems 120 bestimmt. Dabei werden die in den verschiedenen Iterationen von Schritt 1012 bestimmten Leistungsaufnahmen des Leuchten-Bussystems 120 berücksichtigt. Z.B. könnte in einer einfachen Implementierung diejenige Kalibrations-Gleichspannung als Betriebs-Gleichspannung ausgewählt werden, die mit einer minimalen Leistungsaufnahme des Leuchten-Bussystems 120 assoziiert ist. In einer weiteren Implementierung könnte in Schritt 1014 der Betriebspunkt im Rahmen einer Optimierung der Verlustleistung des Leuchten-Bussystems bestimmt werden. Z.B. könnte dies bedeuten, dass die in der aktuellen Iteration von Schritt 1011 ausgewählte Kalibrations-Gleichspannung ein Abbruch-Kriterium der Optimierung erfüllt und deshalb in Schritt 1014 als Betriebs-Gleichspannung ausgewählt wird.

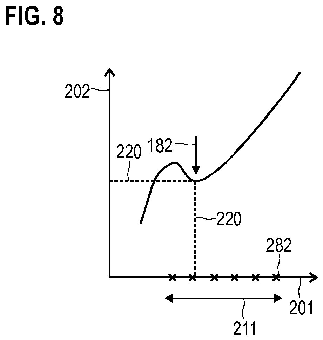

FIG. 8 illustriert Aspekte in Bezug auf das Bestimmen des Betriebspunkts für den Betrieb des Leuchten-Bussystems 120. In FIG. 8 ist die Verlustleistung 202 des Leuchten-Bussystems 202 als Funktion der vom AC/DC-Umsetzer 1111 ausgegebenen Gleichspannung 201 dargestellt.

In FIG. 8 ist insbesondere ein Parameterraum 211 dargestellt, der grundsätzlich im Rahmen eines ordentlichen Betriebs der Leuchten 122 zugänglich ist. Dieser Parameterraum 211 wird durch unterschiedliche Kalibrations-Gleichspannungen 282 abgetastet. Beispielsweise könnte der Parameterraum 211 durch bestimmte Randbedingungen vorgegeben sein. Beispielsweise könnte der Parameterraum 211 durch bestimmte Erfordernisse der DC/DC-Umsetzer 121 eingeschränkt sein.

Im Beispiel der FIG. 8 sind die verschiedenen Kalibrations-Gleichspannungen 282 gleichmäßig über den Parameterraum 211 verteilt. In anderen Beispielen wäre es aber auch möglich, dass das Bestimmen des Betriebspunkts 220 eine Optimierung der Verlustleistung 202 des Leuchten-Bussystems 120 umfasst, wobei im Rahmen der Optimierung zum Beispiel der Parameterraum 211 durch gezielte Variation der Kalibrations-Gleichspannungen 282 besonders schnell abgetastet werden kann.

In FIG. 8 ist ersichtlich, dass die Verlustleistung 202 innerhalb des Parameterraums 211 ein Minimum aufweist. Dieses Minimum definiert den Betriebspunkt 220, bei dem anschließend der AC/DC-Umsetzer 1111 des Betriebsgeräts 111 betrieben werden soll. Zum Beispiel könnte der Betriebspunkt 220 durch die entsprechende Betriebs-Gleichspannung 182 charakterisiert sein; d.h. der Betriebspunkt 220 könnte die entsprechende Betriebs-Gleichspannung 182 (vertikaler Pfeil in FIG. 8; vertikaler gestrichelte Linie in FIG. 8) ausdrücklich beschreiben. In anderen Beispielen könnte es aber auch möglich sein, dass der Betriebspunkt eine Soll-Leistungsaufnahme des Leuchten-Bussystems 120 beschreibt (horizontale gestrichelte Linie in FIG. 8). In einem solchen Beispiel könnte der AC/DC-Umsetzer 1111 zum Einspeisen der Betriebs-Gleichspannung 182 geregelt, das heißt mittels einer Regelschleife, angesteuert werden. Dabei könnte zum Beispiel eine Führungsgröße verwendet werden, die basierend auf der Soll-Leistungsaufnahme bestimmt wird. Außerdem könnte die Betriebs-Gleichspannung 182 als Regelgröße verwendet werden, d.h. während der Betriebsphase verändert werden.

Analog dazu kann auch eine Analyse des Gesamtsystemes umfassend den AC/DC-Umsetzer 1111 und die DC/DC-Umsetzer 121 erfolgen. Dabei können sowohl die Verlustleistungen für den den AC/DC-Umsetzer 1111 als auch für die DC/DC-Umsetzer 121 für die verschiedenen Kalibrations-Gleichspannungen 282 erfasst werden. Es wäre somit auch möglich, dass das Bestimmen des Betriebspunkts 220 eine Optimierung der Verlustleistung 202 des Leuchten-Bussystems 120 umfasst, wobei im Rahmen der Optimierung zum Beispiel sowohl die Verlustleistung des AC/DC-Umsetzers 1111 und der DC/DC-Umsetzer 121 erfasst und ausgewertet werden.

FIG. 9 illustriert schließlich ein erfindungsgemäßes Leuchtensystem 100. Das Leuchtensystem 100 gemäß dem Beispiel der FIG. 9 entspricht grundsätzlich dem Leuchtensystem 100 gemäß dem Beispiel der FIG. 1.

In dem Beispiel der FIG. 9 umfasst das Beleuchtungssystem 100 ein weiteres Betriebsgerät 161. Das weitere Betriebsgerät 161 kann entsprechend dem Betriebsgerät 111 konfiguriert sein (vgl. zum Beispiel FIGs. 2 und 4). Das weitere Betriebsgerät 161 ist auch eingerichtet, um eine Betriebs-Gleichspannung 182 in das Leuchten-Bussystem 120 einzuspeisen.

In dem Beispiel der FIG. 9 umfasst das Beleuchtungssystem 101 keine Steuereinheit 116; es wäre aber auch möglich, dass das Beleuchtungssystem 100 eine Steuereinheit 116 aufweist. Diese kann dann beide Betriebsgeräte 111, 161 steuern.

Das Beleuchtungssystem 100 könnte auch eine größere Anzahl von Betriebsgeräten 111, 161 aufweisen.

Die von dem AC/DC-Umsetzer des weiteren Betriebsgeräts 161 ausgegebene Gleichspannung erweitert den Parameterraum 211 für die Bestimmung des Betriebspunkts 220 des AC/DC-Umsetzers 1111 des Betriebsgeräts 111; insbesondere kann die (gesamte) Verlustleistung und / oder Leistungsaufnahme 202 auch eine Abhängigkeit von der von dem AC/DC-Umsetzer des weiteren Betriebsgeräts 161 ausgegebenen Gleichspannung aufweisen. Deshalb kann es möglich sein, dass der Betriebspunkt 220 des AC/DC-Umsetzers 111 auch basierend auf einer Leistungsaufnahme des Leuchten-Bussystems 120 bestimmt wird, die mit dem weiteren Betriebsgerät 161 assoziiert wird. Diese Leistungsaufnahme kann durch entsprechende Kalibrations-Gleichspannungen empirisch bestimmt werden; dazu kann beispielsweise auch am Betriebsgerät 161 eine Strom-Spannungs-Messung durchgeführt werden.

Insbesondere wird auch der AC/DC-Umsetzer des weiteren Betriebsgeräts 161 zum sequenziellen Einspeisen von mehreren Kalibrations-Gleichspannungen in das Leuchten-Bussystem 120 während der Kalibrations-Phase angesteuert. Dies kann beispielsweise wiederum basierend auf einer Optimierung erfolgen oder aber deterministisch z.B. durch Abarbeiten einer entsprechenden Liste. Insbesondere können die Betriebsgeräte 111, 161 während der Kalibrations-Phase synchronisiert betrieben werden. Dies bedeutet, dass beispielsweise Paare von Kalibrations-Gleichspannungen, die jeweils von dem AC/DC-Umsetzer des Betriebsgeräts 111 und dem AC/DC-Umsetzer des weiteren Betriebsgeräts 161 in das Leuchten-Bussystem 120 eingespeist werden, definiert werden. Dann kann zwischen unterschiedlichen Paaren zeitsynchronisiert umgeschaltet werden. Derart kann der Parameterraum 211 gezielt abgetastet werden.

Um eine solche Synchronisation zwischen den Betriebsgeräten 111, 161 zu erreichen, können Steuerdaten 185 übermittelt werden. Beispielsweise könnten die Steuerdaten 185 zwischen den Betriebsgeräten 111, 161 übermittelt werden. Die Steuerdaten 185 könnten auch von einer zentralen Steuereinheit 116 an die Betriebsgeräte 111, 161 übermittelt werden. PLC kann verwendet werden. Die Steuerdaten 116 könnten z.B. Zeitstempel beinhalten, welche beschreiben, wann entsprechende Kalibrations-Gleichspannungen eingespeist werden sollen. Der Empfang der Steuerdaten 116 könnte das Umschalten zwischen unterschiedlichen Kalibrations-Gleichspannungen auslösen.

Der Betriebspunkt 220 des AC/DC-Umsetzers 1111 des Betriebsgeräts 111 kann dann im Rahmen einer globalen Optimierung der Verlustleistung und / oder Leistungsaufnahme 202 bestimmt werden; dies bedeutet, dass der Parameterraum der Optimierung auch eine Variation der vom AC/DC-Umsetzer des weiteren Betriebsgeräts 161 erzeugten Gleichspannung berücksichtigt. Dieser Parameterraum kann wiederum gezielt durch die Optimierung abgetastet werden.

Grundsätzlich können solche Techniken zum Bestimmen des Betriebspunkts 220 des AC/DC-Umsetzers 1111 des Betriebsgeräts 111 auch für das Bestimmen des Betriebspunkts des AC/DC-Umsetzers des Betriebsgeräts 161 angewendet werden. Dann können im Allgemeinen unterschiedliche Betriebspunkte für die unterschiedlichen Betriebsgeräte 111, 161 erhalten werden.

Es kann im Zuge der Bestimmung des optimalen Betriebspunktes eine Auswahl getroffen werden, welches Betriebsgerät 111, 161 für die Ausgabe der Gleichspannung angewendet wird. Beispielsweise kann automatisch jenes Betriebsgerät 111, 161 für die Ausgabe der Gleichspannung angewendet werden, welches die kleinsten Verluste aufweist. Alternativ kann auch ein Benutzer entscheiden, welches Betriebsgerät 111, 161 für die Ausgabe der Gleichspannung angewendet werden soll.

## Patentansprüche

1. Verfahren, das umfasst:
- Ansteuern eines ersten AC/DC-Umsetzers (111) zum sequenziellen Einspeisen von mehreren Kalibrations-Gleichspannungen (282) in ein Leuchten-Bussystem (120),
- für jede Kalibrations-Gleichspannung (282): Bestimmen einer entsprechenden Leistungsaufnahme (202) des Leuchten-Bussystems (120),
- Bestimmen eines Betriebspunkts (220) des ersten AC/DC-Umsetzers (111) basierend auf den Leistungsaufnahmen (202), und
- Ansteuern des ersten AC/DC-Umsetzers (111) zum Einspeisen einer Betriebs-Gleichspannung (182) in das Leuchten-Bussystem (120) in Übereinstimmung mit dem Betriebspunkt (220),
**dadurch gekennzeichnet,**
**dass** das Verfahren weiter umfasst:
- Ansteuern eines weiteren AC/DC-Umsetzers (161) zum sequenziellen Einspeisen von mehreren weiteren Kalibrations-Gleichspannungen (282) in das Leuchten-Bussystem (120), und
- für jede der mehreren weiteren Kalibrations-Gleichspannungen (282): Bestimmen einer entsprechenden weiteren Leistungsaufnahme (202) des Leuchten-Bussystems (120),
wobei der Betriebspunkt (220) des ersten AC/DC-Umsetzers (111) ferner basierend auf den weiteren Leistungsaufnahmen (202) bestimmt wird.

2. Verfahren nach Anspruch 1,
wobei ein oder mehrere DC/DC-Umsetzer (121) Teil des Leuchten-Bussystem (120) sind und mit den Kalibrations-Gleichspannungen (282) gespeist werden.

3. Verfahren nach Anspruch 1 oder 2,
wobei das Bestimmen des Betriebspunkts (220) eine Optimierung der Verlustleistung (202) des Leuchten-Bussystems (120) umfasst.

4. Verfahren nach einem der Ansprüche 1 bis 3,
wobei eine Kalibrationsphase (1001) das Ansteuern des ersten AC/DC-Umsetzers (111) zum sequenziellen Einspeisen der mehreren Kalibrations-Gleichspannungen (282) und das Ansteuern des weiteren AC/DC-Umsetzers (161) zum sequenziellen Einspeisen der mehreren weiteren Kalibrations-Gleichspannungen (282) umfasst,
wobei eine Betriebsphase (1002) das Ansteuern des ersten AC/DC-Umsetzers (111) zum Einspeisen der Betriebs-Gleichspannung (182) umfasst, und
wobei das Verfahren weiterhin umfasst:
- wiederholtes Auslösen der Kalibrationsphase (1001) und wiederholtes Bestimmen des Betriebspunkts (220) für eine jeweils nachfolgend ausgelöste Betriebsphase (1002).

5. Verfahren nach einem der voranstehenden Ansprüche,
wobei das Ansteuern des ersten AC/DC-Umsetzers (111) zum sequenziellen Einspeisen der mehreren Kalibrations-Gleichspannungen (282) und das Ansteuern des weiteren AC/DC-Umsetzers (161) zum sequenziellen Einspeisen der mehreren weiteren Kalibrations-Gleichspannungen (282) durch eine Initialisierung des Leuchten-Bussystems (120) ausgelöst werden.

6. Verfahren nach einem der voranstehenden Ansprüche,
wobei das Ansteuern des ersten AC/DC-Umsetzers (111) zum sequenziellen Einspeisen der mehreren Kalibrations-Gleichspannungen (282) und das Ansteuern des weiteren AC/DC-Umsetzers (161) zum sequenziellen Einspeisen der mehreren weiteren Kalibrations-Gleichspannungen (282) durch Verändern eines Dimmer-Levels von Leuchten, die mit dem Leuchten-Bussystem (120) verbunden sind, ausgelöst werden.

7. Verfahren nach Anspruch 2 und einem der voranstehenden Ansprüche,
wobei ein Betriebspunkt der DC/DC-Umsetzer (121) basierend auf den weiteren Leistungsaufnahmen (202) bestimmt wird.

8. Verfahren nach einem der vorhergehenden Ansprüche, das weiterhin umfasst:
- Übermitteln von Steuerdaten an zumindest eine von einer mit dem ersten AC/DC-Umsetzer (111) assoziierten Schnittstelle (1113) und einer mit dem weiteren AC/DC-Umsetzer (161) assoziierten weiteren Schnittstelle (1113), wobei die Steuerdaten eine Synchronisation des Ansteuerns des ersten AC/DC-Umsetzers (111) zum Einspeisen der mehreren Kalibrations-Gleichspannungen (282) und des Ansteuerns des weiteren AC/DC-Umsetzers (111) zum Einspeisen der mehreren weiteren Kalibrations-Gleichspannungen (282) bewirken.

9. Verfahren nach einem der vorhergehenden Ansprüche,
wobei das Bestimmen des Betriebspunkts (220) des ersten AC/DC-Umsetzers (111) eine globale Optimierung der Verlustleistung (202) des Leuchten-Bussystems (120) bei Versorgung durch den ersten AC/DC-Umsetzer (111) und den weiteren AC/DC-Umsetzer (161) umfasst.

10. Verfahren nach einem der vorhergehenden Ansprüche, das weiterhin umfasst:
- Bestimmen eines weiteren Betriebspunkts (220) des weiteren AC/DC-Umsetzers (161) basierend auf den Leistungsaufnahmen (202) und ferner basierend auf den weiteren Leistungsaufnahmen (202), und
- Ansteuern des weiteren AC/DC-Umsetzers (161) zum Einspeisen einer weiteren Betriebs-Gleichspannung (182) in das Leuchten-Bussystem (120) in Übereinstimmung mit dem weiteren Betriebspunkt (220),
wobei der Betriebspunkt (220) des ersten AC/DC-Umsetzers (111) verschieden ist von dem Betriebspunkt (220) des weiteren AC/DC-Umsetzers (161).

11. Verfahren nach einem der Ansprüche 1-9,
wobei der Betriebspunkt (220) die Betriebs-Gleichspannung (182) explizit beschreibt.

12. Verfahren nach einem der Ansprüche 1-9,
wobei der Betriebspunkt (220) eine Soll-Leistungsaufnahme des Leuchten-Bussystems (120) beschreibt,
wobei das Ansteuern des ersten AC/DC-Umsetzers (111) zum Einspeisen der Betriebs-Gleichspannung (182) geregelt erfolgt mit einer basierend auf der Soll-Leistungsaufnahme bestimmten Führungsgröße und der Betriebs-Gleichspannung (182) als Regelgröße.

13. Beleuchtungssystem (100), umfassend
ein Leuchten-Bussystem (120), und
ein erstes Betriebsgerät (111) mit einer Recheneinheit (1112, 1162) zum Ansteuern eines AC/DC-Umsetzers (1111) des ersten Betriebsgeräts (111),
wobei das Beleuchtungssystem (100) eingerichtet ist, um die folgenden Schritte durchzuführen:
- Ansteuern des AC/DC-Umsetzers (1111) des ersten Betriebsgeräts (111) zum sequenziellen Einspeisen von mehreren Kalibrations-Gleichspannungen (282) in das Leuchten-Bussystem (120),
- für jede Kalibrations-Gleichspannung: Bestimmen einer entsprechenden Leistungsaufnahme (202) des Leuchten-Bussystems (120),
- Bestimmen eines Betriebspunkts (220) des AC/DC-Umsetzers (1111) des ersten Betriebsgeräts (111) basierend auf den Leistungsaufnahmen (202), und
- Ansteuern des ersten AC/DC-Umsetzers (1111) des ersten Betriebsgeräts (111) zum Einspeisen einer Betriebs-Gleichspannung (182) in das Leuchten-Bussystem (120) in Übereinstimmung mit dem Betriebspunkt (220),
**dadurch gekennzeichnet,**
**dass** das Beleuchtungssystem (100) ein zweites Betriebsgerät (161) mit einer Recheneinheit (1112, 1162) zum Ansteuern eines AC/DC-Umsetzers (1111) des zweiten Betriebsgeräts (161) umfasst, und
**dass** das Beleuchtungssystem (100) eingerichtet ist, um die weiteren Schritte durchzuführen:
- Ansteuern des AC/DC-Umsetzers (1111) des zweiten Betriebsgeräts (161) zum sequenziellen Einspeisen von mehreren weiteren Kalibrations-Gleichspannungen (282) in das Leuchten-Bussystem (120),
- für jede der mehreren weiteren Kalibrations-Gleichspannungen (282): Bestimmen einer entsprechenden weiteren Leistungsaufnahme (202) des Leuchten-Bussystems (120), und
- Bestimmen des Betriebspunkts (220) des AC/DC-Umsetzers (1111) des ersten Betriebsgeräts (111) ferner basierend auf den weiteren Leistungsaufnahmen (202).

14. Beleuchtungssystem (100) nach Anspruch 13,
wobei das Beleuchtungssystem (100) eingerichtet ist, um ein Verfahren nach einem der Ansprüche 2 - 12 auszuführen.

## Claims

1. Method comprising:
- controlling a first AC/DC converter (111) to sequentially feed a plurality of calibration direct voltages (282) into a luminaire bus system (120),
- for each calibration direct voltage (282): determining a corresponding power consumption (202) of the luminaire bus system (120),
- determining an operating point (220) of the first AC/DC converter (111) on the basis of the power consumptions (202), and
- controlling the first AC/DC converter (111) to feed an operating direct voltage (182) into the luminaire bus system (120) in accordance with the operating point (220),
**characterized in that**
the method further comprises:
- controlling a further AC/DC converter (161) to sequentially feed a plurality of further calibration direct voltages (282) into the luminaire bus system (120), and
- for each of the plurality of further calibration direct voltages (282): determining a corresponding further power consumption (202) of the luminaire bus system (120),
wherein the operating point (220) of the first AC/DC converter (111) is also determined on the basis of the further power consumptions (202).

2. Method according to Claim 1,
wherein one or more DC/DC converters (121) are part of the luminaire bus system (120) and are supplied with the calibration direct voltages (282).

3. Method according to Claim 1 or 2,
wherein the determination of the operating point (220) includes an optimization of the power loss (202) of the luminaire bus system (120).

4. Method according to any one of Claims 1 to 3,
wherein a calibration phase (1001) includes controlling the first AC/DC converter (111) to sequentially feed the plurality of calibration direct voltages (282) and controlling the further AC/DC converter (161) to sequentially feed the plurality of further calibration direct voltages (282),
wherein an operating phase (1002) includes controlling the first AC/DC converter (111) to feed the operating direct voltage (182), and
wherein the method furthermore comprises:
- repeatedly triggering the calibration phase (1001), and repeatedly determining the operating point (220) for a respective subsequently triggered operating phase (1002).

5. Method according to any one of the preceding claims,
wherein controlling the first AC/DC converter (111) to sequentially feed the plurality of calibration direct voltages (282) and controlling the further AC/DC converter (161) to sequentially feed the plurality of further calibration direct voltages (282) are triggered by an initialization of the luminaire bus system (120).

6. Method according to any one of the preceding claims,
wherein controlling the first AC/DC converter (111) to sequentially feed the plurality of calibration direct voltages (282) and controlling the further AC/DC converter (161) to sequentially feed the plurality of further calibration direct voltages (282) are triggered by changing a dimmer level of luminaires that are connected to the luminaire bus system (120).

7. Method according to Claim 2 and any one of the preceding claims,
wherein an operating point of the DC/DC converters (121) is determined on the basis of the further power consumptions (202).

8. Method according to any one of the preceding claims, furthermore comprising:
- transmitting control data to at least one of an interface (1113) associated with the first AC/DC converter (111) and a further interface (1113) associated with the further AC/DC converter (161), wherein the control data effect a synchronization of the controlling of the first AC/DC converter (111) to feed the plurality of calibration direct voltages (282) and the controlling of the further AC/DC converter (111) to feed the plurality of further calibration direct voltages (282).

9. Method according to any one of the preceding claims,
wherein the determination of the operating point (220) of the first AC/DC converter (111) includes a global optimization of the power loss (202) of the luminaire bus system (120) when supplied by the first AC/DC converter (111) and the further AC/DC converter (161).

10. Method according to any one of the preceding claims, furthermore comprising:
- determining a further operating point (220) of the further AC/DC converter (161) on the basis of the power consumptions (202) and also on the basis of the further power consumptions (202), and
- controlling the further AC/DC converter (161) to feed a further operating direct voltage (182) into the luminaire bus system (120) in accordance with the further operating point (220),
wherein the operating point (220) of the first AC/DC converter (111) is different from the operating point (220) of the further AC/DC converter (161).

11. Method according to any one of Claims 1-9,
wherein the operating point (220) explicitly describes the operating direct voltage (182).

12. Method according to any one of Claims 1-9,
wherein the operating point (220) describes a target power consumption of the luminaire bus system (120),
wherein controlling the first AC/DC converter (111) to feed the operating direct voltage (182) takes place in a regulated manner with a reference variable determined on the basis of the target power consumption and with the operating direct voltage (182) as controlled variable.

13. Lighting system (100) comprising
a luminaire bus system (120), and
a first operating device (111) having a computing unit (1112, 1162) for controlling an AC/DC converter (1111) of the first operating device (111),
wherein the lighting system (100) is configured to perform the following steps:
- controlling the AC/DC converter (1111) of the first operating device (111) to sequentially feed a plurality of calibration direct voltages (282) into the luminaire bus system (120),
- for each calibration direct voltage: determining a corresponding power consumption (202) of the luminaire bus system (120),
- determining an operating point (220) of the AC/DC converter (1111) of the first operating device (111) on the basis of the power consumptions (202), and
- controlling the first AC/DC converter (1111) of the first operating device (111) to feed an operating direct voltage (182) into the luminaire bus system (120) in accordance with the operating point (220),
**characterized in that**
the lighting system (100) comprises a second operating device (161) having a computing unit (1112, 1162) for controlling an AC/DC converter (1111) of the second operating device (161), and
the lighting system (100) is configured to perform the further steps:
- controlling the AC/DC converter (1111) of the second operating device (161) to sequentially feed a plurality of further calibration direct voltages (282) into the luminaire bus system (120),
- for each of the plurality of further calibration direct voltages (282): determining a corresponding further power consumption (202) of the luminaire bus system (120), and
- determining the operating point (220) of the AC/DC converter (1111) of the first operating device (111) also on the basis of the further power consumptions (202).

14. Lighting system (100) according to Claim 13,
wherein the lighting system (100) is configured to carry out a method according to any one of Claims 2-12.

## Revendications

1. Procédé, comprenant :
- la commande d'un premier convertisseur CA/CC (111) pour l'injection séquentielle de plusieurs tensions continues d'étalonnage (282) dans un système de bus d'éclairage (120),
- pour chaque tension continue d'étalonnage (282) : la détermination d'une puissance absorbée correspondante (202) du système de bus d'éclairage (120),
- la détermination d'un point de fonctionnement (220) du premier convertisseur CA/CC (111) sur la base des puissances absorbées (202) et
- la commande du premier convertisseur CA/CC (111) pour l'injection d'une tension continue de fonctionnement (182) dans le système de bus d'éclairage (120) conformément au point de fonctionnement (220),
**caractérisé en ce**
**que** le procédé comprend en outre :
- la commande d'un autre convertisseur CA/CC (161) pour l'injection séquentielle de plusieurs autres tensions continues d'étalonnage (282) dans le système de bus d'éclairage (120) et
- pour chacune des plusieurs autres tensions continues d'étalonnage (282) : la détermination d'une autre puissance absorbée correspondante (202) du système de bus d'éclairage (120),
le point de fonctionnement (220) du premier convertisseur CA/CC (111) étant en outre déterminé sur la base des autres puissances absorbées (202).

2. Procédé selon la revendication 1,
dans lequel un ou plusieurs convertisseurs CC/CC (121) forment une partie du système de bus d'éclairage (120) et sont alimentés avec les tensions continues d'étalonnage (282).

3. Procédé selon la revendication 1 ou 2,
dans lequel la détermination du point de fonctionnement (220) comprend une optimisation de la puissance dissipée (202) du système de bus d'éclairage (120).

4. Procédé selon l'une quelconque des revendications 1 à 3,
dans lequel une phase d'étalonnage (1001) comprend la commande du premier convertisseur CA/CC (111) pour l'injection séquentielle des plusieurs tensions continues d'étalonnage (282) et la commande de l'autre convertisseur CA/CC (161) pour l'injection séquentielle des plusieurs autres tensions continues d'étalonnage (282),
dans lequel une phase de fonctionnement (1002) comprend la commande du premier convertisseur CA/CC (111) pour l'injection de la tension continue de fonctionnement (182) et
le procédé comprenant en outre :
- le déclenchement répété de la phase d'étalonnage (1001) et la détermination répétée du point de fonctionnement (220) pour une phase de fonctionnement (1002) déclenchée respectivement à la suite.

5. Procédé selon l'une quelconque des revendications précédentes,
dans lequel la commande du premier convertisseur CA/CC (111) pour l'injection séquentielle des plusieurs tensions continues d'étalonnage (282) et la commande de l'autre convertisseur CA/CC (161) pour l'injection séquentielle des plusieurs autres tensions continues d'étalonnage (282) sont déclenchées par une initialisation du système de bus d'éclairage (120).

6. Procédé selon l'une quelconque des revendications précédentes,
dans lequel la commande du premier convertisseur CA/CC (111) pour l'injection séquentielle des plusieurs tensions continues d'étalonnage (282) et la commande de l'autre convertisseur CA/CC (161) pour l'injection séquentielle des plusieurs autres tensions continues d'étalonnage (282) sont déclenchées par la modification d'un niveau de variateur de lampes qui sont reliées au système de bus d'éclairage (120).

7. Procédé selon la revendication 2 et l'une quelconque des revendications précédentes,
dans lequel un point de fonctionnement des convertisseurs CC/CC (121) est déterminé sur la base des autres puissances absorbées (202).

8. Procédé selon l'une quelconque des revendications précédentes, qui comprend en outre :
- la transmission de données de commande à au moins une parmi une interface (1113) associée au premier convertisseur CA/CC (111) et une autre interface (1113) associée à l'autre convertisseur CA/CC (161), les données de commande provoquant une synchronisation de la commande du premier convertisseur CA/CC (111) pour l'injection des plusieurs tensions continues d'étalonnage (282) et de la commande de l'autre convertisseur CA/CC (111) pour l'injection des plusieurs autres tensions continues d'étalonnage (282).

9. Procédé selon l'une quelconque des revendications précédentes,
dans lequel la détermination du point de fonctionnement (220) du premier convertisseur CA/CC (111) comprend une optimisation globale de la puissance dissipée (202) du système de bus d'éclairage (120) lors de l'alimentation par le premier convertisseur CA/CC (111) et l'autre convertisseur CA/CC (161).

10. Procédé selon l'une quelconque des revendications précédentes, qui comprend en outre :
- la détermination d'un autre point de fonctionnement (220) de l'autre convertisseur CA/CC (161) sur la base des puissances absorbées (202) et en outre sur la base des autres puissances absorbées (202) et
- la commande de l'autre convertisseur CA/CC (161) pour l'injection d'une autre tension continue de fonctionnement (182) dans le système de bus d'éclairage (120) conformément à l'autre point de fonctionnement (220),
le point de fonctionnement (220) du premier convertisseur CA/CC (111) étant différent du point de fonctionnement (220) de l'autre convertisseur CA/CC (161).

11. Procédé selon l'une quelconque des revendications 1-9,
dans lequel le point de fonctionnement (220) décrit de manière explicite la tension continue de fonctionnement (182).

12. Procédé selon l'une quelconque des revendications 1-9,
dans lequel le point de fonctionnement (220) décrit une puissance absorbée théorique du système de bus d'éclairage (120),
dans lequel la commande du premier convertisseur CA/CC (111) pour l'injection de la tension continue de fonctionnement (182) s'effectue de manière régulée avec une variable de référence déterminée sur la base de la puissance absorbée théorique et la tension continue de fonctionnement (182) sous forme de variable de contrôle.

13. Système d'éclairage (100), comprenant
un système de bus d'éclairage (120) et
un premier appareil de fonctionnement (111) comprenant une unité de calcul (1112, 1162) pour la commande d'un convertisseur CA/CC (1111) du premier appareil de fonctionnement (111),
dans lequel le système de bus d'éclairage (100) est conçu pour réaliser les étapes suivantes :
- la commande du convertisseur CA/CC (1111) du premier appareil de fonctionnement (111) pour l'injection séquentielle de plusieurs tensions continues d'étalonnage (282) dans le système de bus d'éclairage (120),
- pour chaque tension continue d'étalonnage : la détermination d'une puissance absorbée correspondante (202) du système de bus d'éclairage (120),
- la détermination d'un point de fonctionnement (220) du convertisseur CA/CC (1111) du premier appareil de fonctionnement (111) sur la base des puissances absorbées (202) et
- la commande du premier convertisseur CA/CC (1111) du premier appareil de fonctionnement (111) pour l'injection d'une tension continue de fonctionnement (182) dans le système de bus d'éclairage (120) conformément au point de fonctionnement (220),
**caractérisé en ce**
**que** le système d'éclairage (100) comprend un second appareil de fonctionnement (161) comprenant une unité de calcul (1112, 1162) pour la commande d'un convertisseur CA/CC (1111) du second appareil de fonctionnement (161) et
**que** le système d'éclairage (100) est conçu pour réaliser les autres étapes :
- la commande du convertisseur CA/CC (1111) du second appareil de fonctionnement (161) pour l'injection séquentielle de plusieurs autres tensions continues d'étalonnage (282) dans le système de bus d'éclairage (120),
- pour chacune des plusieurs autres tensions continues d'étalonnage (282) : la détermination d'une autre puissance absorbée correspondante (202) du système de bus d'éclairage (120) et
- la détermination du point de fonctionnement (220) du convertisseur CA/CC (1111) du premier appareil de fonctionnement (111) en outre sur la base des autres puissances absorbées (202).

14. Système d'éclairage (100) selon la revendication 13,
dans lequel le système d'éclairage (100) est conçu pour réaliser un procédé selon l'une quelconque des revendications 2 à 12.
